# EUROPÄISCHE PATENTSCHRIFT

(11) **EP 2 269 749 B1**
(45) Veröffentlichungstag und Bekanntmachung des Hinweises auf die Patenterteilung: **17.04.2013**
(21) Anmeldenummer: 09164497.1
(22) Anmeldetag: 03.07.2009
(51) Int. Cl.: B09B 3/00

(54) **Vorrichtung zur Behandlung von Abfallstoffen**
Device for treating garbage
Dispositif de traitement de déchets

(43) Veröffentlichungstag der Anmeldung: 05.01.2011
(73) Patentinhaber: Fritsch, Edwin, 35619 Braunfels (DE)
(72) Erfinder: Fritsch, Edwin, 35619 Braunfels (DE)
(74) Vertreter: Knefel, Cordula

(56) Entgegenhaltungen:
- EP-A- 0 326 652
- EP-A- 0 357 928
- EP-A- 0 648 540
- DE-A1- 4 126 452
- DE-A1- 4 142 222
- DE-U1- 29 710 684
- US-A- 5 863 476

## Beschreibung

Die Erfindung betrifft eine Vorrichtung zur Bearbeitung von besonders überwachungsbedürftigen Abfallstoffen oder von zerkleinerten besonders überwachungsbedürftigen Abfallstoffen, die wenigstens eine Pressvorrichtung aufweist.

Besonders überwachungsbedürftige Abfallstoffe sind beispielsweise Glaswolle, Mineralwolle und sonstige anorganische Stoffe.

Gemäß dem Stand der Technik sind Mineralwolle, Glaswolle und sonstige anorganische Stoffe bezüglich der Abfallentsorgung besonders überwachungsbedürftig. Diese Stoffe werden als BÜ-Stoffe bezeichnet gemäß der Verordnung über das europäische Abfallverzeichnis (Abfallverzeichnis-Verordnung (AVV)).

Besonders überwachungsbedürftige Abfallstoffe haben gemäß der Abfallverzeichnis-Verordnung (AVV) die Nummer KMF AVV 170603 (KMF bedeutet "Künstliche Mineralfasern) .

Da es sich bei diesen Abfallstoffen um besonders überwachungsbedürftige Abfallstoffe handelt, ist ein Transport nach der geltenden Abfallverzeichnis-Verordnung (AVV) nicht ohne Weiteres erlaubt.

Zum Stand der Technik (DE 41 26 452 A1) gehört ein verfahren und eine Vorrichtung zum Entsorgen von Altgegenständen, gemäß denen Staub absonderndes Schadstoffmaterial von Altgegenständen entfernt werden soll, damit die Altgegenstände recycelt werden können. Gemäß dieser Druckschrift ist lediglich vorgesehen, die Altgegenstände in einem Tauchbad zu waschen, damit die meist aus Metall bestehenden Altgegenstände weiterverarbeitet werden können.

Weiterhin gehört zum Stand der Technik (EP 0 357 928) ein Verfahren zum Entsorgen von Asbeststaub. Gemäß diesem Stand der Technik wird der Asbeststaub nach dosierter Zugabe von Wasser und Zementmilch zu stückigem Gut wie Briketts verpresst. Eine Möglichkeit, den Asbeststaub lediglich transportfähig zu machen, um ihn zu einem weiterverarbeitenden Werk zu transportieren, ist gemäß dieser Druckschrift nicht angegeben.

Zum Stand der Technik (DE 297 10 684 U1 gehört darüber hinaus eine Versorgungseinrichtung, gemäß der der Behälter, in dem der schadstoffhaltige Abfall angeordnet ist, in einer mobilen Wascheinheit von außen gewaschen wird. Eine besondere Verarbeitung, um die Abfallstoffe transportfähig zu machen, ist gemäß dieser Druckschrift nicht offenbart.

Auch die zum Stand der Technik (DE 41 42 222 A1) gehörende Geräteeinrichtung zum Verfestigen von asbesthaltigen Materialien arbeitet mit dem Zusatz von einem Bindemittel, damit der Abfall mit dem Bindemittel gemischt wird, in Formen gefüllt und ausgehärtet wird, so dass die ausgehärteten Materialblöcke auf eine Deponie gebracht werden können. Die Geräteeinrichtung beschäftigt sich nicht damit, auf besondere einfache Art und weise die Abfallstoffe transportfähig zu machen, um sie in einem entsprechenden Werk optimal weiterzuverarbeiten.

Das der Erfindung zugrunde liegende technische Problem besteht darin, eine Vorrichtung anzugeben, mit der besonders überwachungsbedürftige Abfallstoffe oder zerkleinerte besonders überwachungsbedürftige Abfallstoffe vor Ort, das heißt, dort wo sie anfallen, transportfähig aufbereitet werden können.

Dieses technische Problem wird durch eine Vorrichtung gemäß Anspruch 1 gelöst.

Die folgenden Ausführungen beziehen sich auf besonders überwachungsbedürftige Abfallstoffe oder auf besonders überwachungsbedürftige zerkleinerte Abfallstoffe. Der Einfachheit halber wird jedoch nur noch von Abfallstoffen die Rede sein.

Die erfindungsgemäße Vorrichtung zur Bearbeitung von besonders überwachungsbedürftigen Abfallstoffen oder von zerkleinerten besonders überwachungsbedürftigen Abfallstoffen, die wenigstens eine Pressvorrichtung aufweist, zeichnet sich dadurch aus, dass die Vorrichtung mobil ausgebildet ist und dass in der Vorrichtung während des Bearbeitungsvorganges ein Unterdruck vorhanden ist.

Die oben genannten besonders überwachungsbedürftigen Abfallstoffe dürfen nicht ohne Weiteres zu einer Anlage zur Aufbereitung oder Verbrennung transportiert werden. Da die Abfallstoffe in der Regel jedoch nicht dort anfallen, wo Verarbeitungsanlangen existieren, ist es erforderlich, die Stoffe zu transportieren.

Das bedeutet, dass die Stoffe vor Ort, dort, wo sie anfallen, so bearbeitet werden müssen, dass sie transportabel werden. Die Stoffe müssen hierbei unter Bedingungen verpackt werden, so dass die Abfallverzeichnis-Verordnung erfüllt ist.

Hierzu ist gemäß der Erfindung vorgesehen, die Vorrichtung zur Bearbeitung der Abfallstoffe, die wenigstens eine Pressvorrichtung aufweist, mobil auszubilden. Gemäß einer besonders bevorzugten Ausführungsform ist die Vorrichtung als Container beispielsweise als 40-Fuß-Seecontainer ausgebildet.

Damit von den Abfallstoffen keine Partikel ungewollt in die Umwelt gelangen können, ist in der Vorrichtung, das heißt beispielsweise in dem Container während des Bearbeitungsvorganges ein Unterdruck vorhanden. Der Unterdruck ist während des Bearbeitungsprozesses ständig vorhanden. Vorteilhaft wird der Unterdruck auch vor und nach dem Bearbeitungsvorgang aufrecht erhalten.

Der Bearbeitungsprozess besteht vorteilhaft darin, dass die Abfallstoffe der Vorrichtung zugeführt werden, und zwar in einem Bereich, in dem das Material in die Vorrichtung gebracht wird. In diesem Bereich ist vorteilhaft eine Luftabsaugung vorgesehen.

Aus der erfindungsgemäßen Vorrichtung werden gepresste und verpackte Ballen der Abfallstoffe herausgegeben. In diesem Abgabebereich ist vorteilhaft ebenfalls eine Luftabsaugung vorgesehen.

Die Abfallstoffe werden beispielsweise von einer Haussanierung kommend in Kunststoffsäcken verpackt angeliefert, um diese außerhalb der Baustelle unmittelbar in die erfindungsgemäße Vorrichtung geben zu können. Die Abfallstoffe werden in der Vorrichtung mit Flüssigkeit, beispielsweise mit Wasser besprüht, falls einer der Kunststoffsäcke reißt. Hierdurch wird zusätzlich gewährleistet, dass das Material nicht über den Luftweg nach außen gelangt trotz des Unterdruckes in der erfindungsgemäßen Vorrichtung.

Gemäß der Erfindung wird ein Flüssigkeitsnebel erzeugt, mit dem das Material, beispielsweise die locker verpackten Abfallstoffe, besprüht wird. Das Material wird vorteilhaft auf einem Zuführband einem Zuführtrichter für die Presse zugeleitet. Im Bereich des Zuführbandes und/oder des Trichters ist der Flüssigkeitsnebel vorteilhaft vorhanden.

Die Abfallstoffe werden in der erfindungsgemäßen Vorrichtung gepresst und anschließend verpackt, vorzugsweise in einen Verpackungsschlauch, der jeweils abgeteilt und verschweißt wird, so dass die Abfallstoffe zu Ballen gepresst und luftdicht verpackt die erfindungsgemäße Vorrichtung verlassen. Zum Verschweißen des Verpackungsmaterials ist wenigstens eine Schweißvorrichtung vorgesehen.

Damit ein Unterdruck in der erfindungsgemäßen Vorrichtung erzeugt wird, ist vorteilhaft im Bereich der Abgabe des Materials und/oder im Bereich der Zuführung des Materials jeweils ein Schutzvorhang angeordnet, der sich nach Durchreichen der Abfallstoffe automatisch wieder schließt. Vorteilhaft ist zum Verpacken ein Endlosschlauch vorgesehen.

Gemäß einer weiteren vorteilhaften Ausführungsform der Erfindung sind in der Anlage sämtliche Lager, Bindeeinheiten und andere bewegliche Teile, wo Fasern austreten können, gesondert gekapselt, das heißt, sie sind mit zusätzlichen Dichtungen wie Gummidichtungen, Porzellandichtungen und dergleichen versehen, damit aus der Presse kein Material austreten kann.

Weitere Merkmale und Vorteile der Erfindung ergeben sich anhand der zugehörigen Zeichnung, in der mehrere Ausführungsbeispiele einer erfindungsgemäßen Vorrichtung nur beispielhaft dargestellt sind. In der Zeichnung zeigen:
- Fig. 1: eine erfindungsgemäße Vorrichtung, teilweise aufgeschnitten in perspektivischer Vorderan- sicht;
- Fig. 2: eine erfindungsgemäße Vorrichtung, teilweise aufgeschnitten in perspektivischer Rückan- sicht;
- Fig. 3: eine Anlage zur Erzeugung eines Flüssig- keitsnebels im Zuführband in perspektivi- scher Ansicht;
- Fig. 4: eine Ausgabe der gepressten Abfallstoffe in perspektivischer Ansicht.

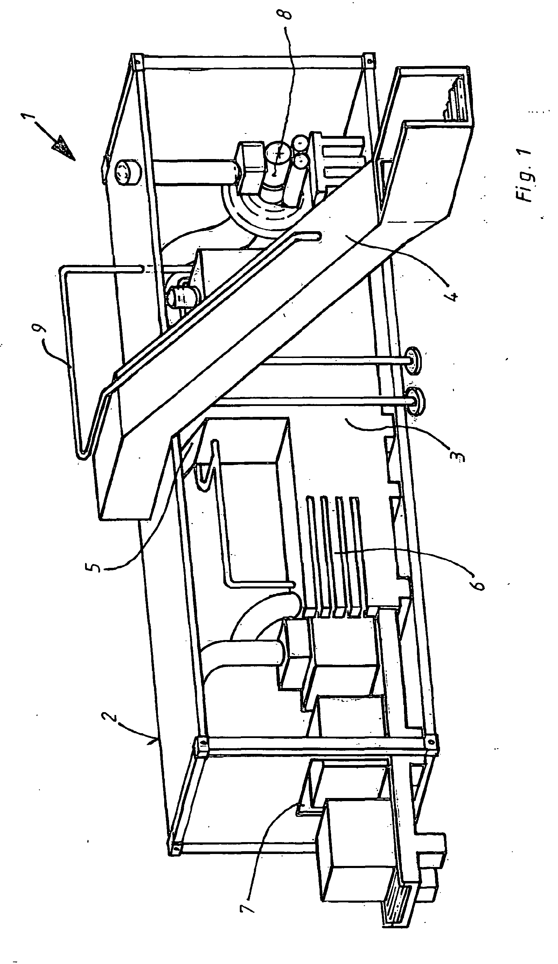

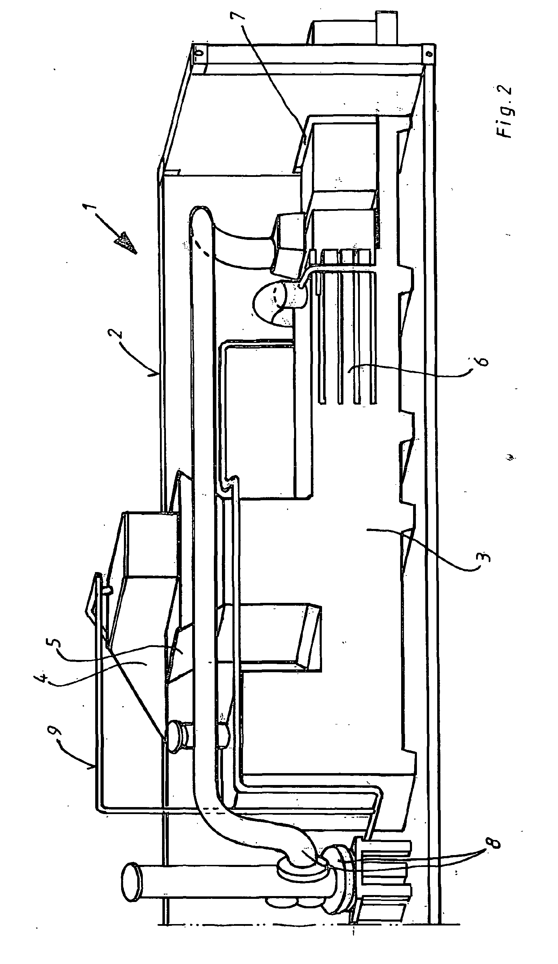

Fig. 1 und 2 zeigen die Vorrichtung 1, die als Container 2 ausgebildet ist. In der Vorrichtung 1 ist eine Presse 3 angeordnet, in der Abfallstoffe, die über ein Zuführband 4 und einen Zuführtrichter 5 zugeführt werden, gepresst werden. Die Vorrichtung 1 weist darüber hinaus eine Verpackungsschlaucheinrichtung 6 auf. Durch eine Öffnung 7 im Container werden die zu Ballen verpressten und verpackten und luftdicht eingeschweißten Abfallstoffe aus der Vorrichtung 1 herausgegeben.

In der Vorrichtung 1 ist ein Aggregat 8 zur Erzeugung eines Unterdruckes in der Vorrichtung 1 vorgesehen. Insbesondere erfolgt eine Absaugung im Bereich des Zuführtrichters 5 und der Öffnung 7.

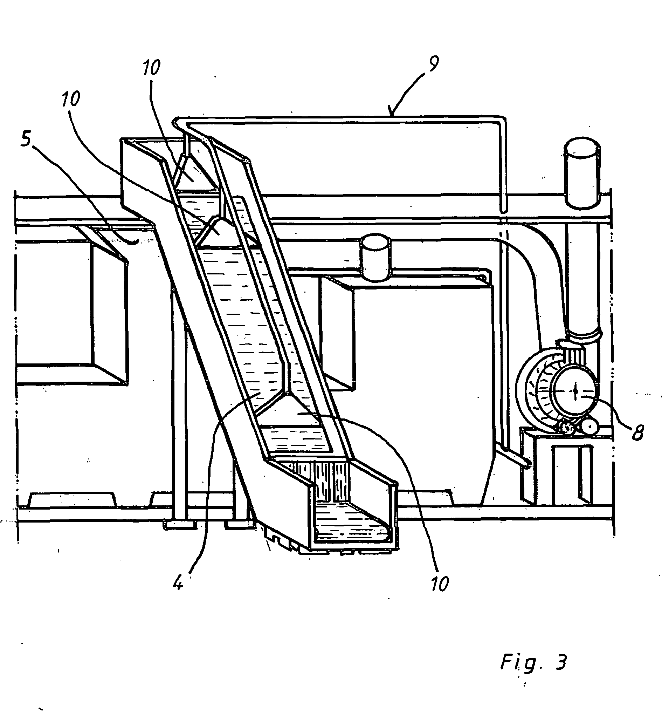

Gemäß Fig. 3 ist eine Wasserleitung 9 vorgesehen, die im Bereich des Zuführtrichters 5 und des Zuführbandes 4 Wasser zuführt, das in diesen Bereichen vernebelt wird.

Es sind Vernebelungseinrichtungen 10 gezeigt, die in dem geschlossenen Tunnel des Zuführbandes 4 und im Bereich des Zuführtrichters 5 angeordnet sind.

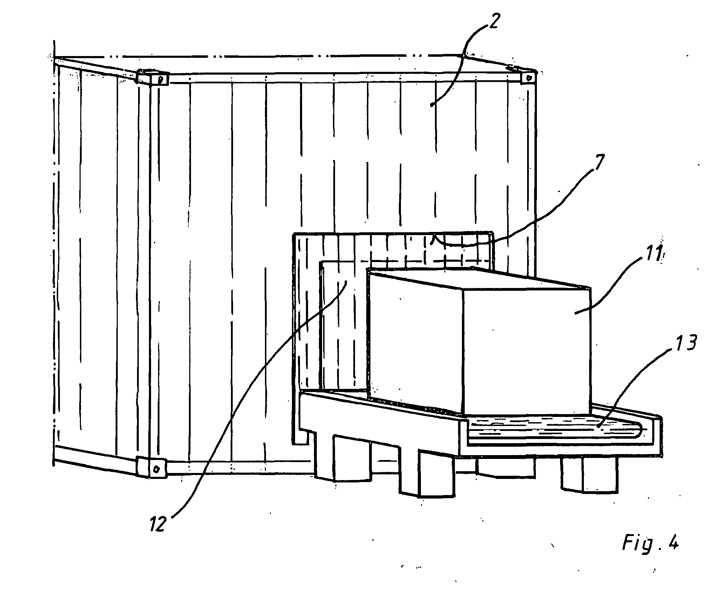

Gemäß Fig. 4 ist die Ausgabeöffnung 7 dargestellt, durch die der zu Ballen 11 gepresste und verschweißte Abfall 11 aus dem Container 2 nach außen gelangt. Die Öffnung 7 ist mit einem Schutzvorhang 12 verschlossen, so dass in dem Container 2 ein Unterdruck erzeugt werden kann. Die Abfallballen 11 werden mittels eines Förderbandes 13 in der Vorrichtung nach außen transportiert.

Bezugszahlen
- 1: Vorrichtung
- 2: Container
- 3: Presse
- 4: Zuführband
- 5: Zuführtrichter
- 6: Verpackungseinrichtung
- 7: Öffnung
- 8: Aggregat
- 9: Wasserleitung
- 10: Vernebelungseinrichtung
- 11: Abfallballen
- 12: Schutzvorhang
- 13: Förderband

## Patentansprüche

1. Vorrichtung zur Bearbeitung von besonders überwachungsbedürftigen Abfallstoffen oder von zerkleinerten besonders überwachungsbedürftigen Abfallstoffen gemäß der Abfallverzeichnis-Verordnung (AVV) mit der Nummer KMF AVV 170603* zur Erzeugung transportfähiger Abfallstoffe, die wenigstens eine Pressvorrichtung aufweist, wobei die Vorrichtung (1) mobil ausgebildet ist und wobei in der Vorrichtung (1) während des Bearbeitungsvorganges ein Unterdruck vorhanden ist,
**dadurch gekennzeichnet, dass** für die in die Vorrichtung (1) eingebrachten in Kunststoffsäcken verpackten Abfallstoffe wenigstens eine Vorrichtung zum Besprühen der in Kunststoffsäcken verpackten Abfallstoffe mit Flüssigkeit vorgesehen ist, dass wenigstens ein Zuführband (4) und/oder wenigstens ein Zuführtrichter (5) für die Abfallstoffe vorgesehen ist, und dass im Bereich des wenigstens einen Zuführbandes (4) und/oder des wenigstens einen Zuführtrichters (5) ein Flüssigkeitsnebel vorhanden ist.

2. Vorrichtung nach Anspruch 1, **dadurch gekennzeichnet, dass** die Vorrichtung (1) als Container (2) ausgebildet ist.

3. Vorrichtung nach Anspruch 1 oder 2, **dadurch gekennzeichnet, dass** eine Luftabsaugung vorgesehen ist.

4. Vorrichtung nach Anspruch 1, **dadurch gekennzeichnet, dass** wenigstens eine Vorrichtung (10) zur Erzeugung eines Flüssigkeitsnebels vorgesehen ist.

5. Vorrichtung nach einem der vorhergehenden Ansprüche, **dadurch gekennzeichnet, dass** in der Vorrichtung 1 wenigstens eine Verpackungsvorrichtung (6) für die gepressten Abfallstoffe vorgesehen ist.

6. Vorrichtung nach Anspruch 5, **dadurch gekennzeichnet, dass** eine Schlauchverpackungsvorrichtung vorgesehen ist.

7. Vorrichtung nach einem der vorhergehenden Ansprüche, **dadurch gekennzeichnet, dass** wenigstens eine Schweißeinrichtung zum verschweißen von Verpackungsmaterial vorgesehen ist.

8. Vorrichtung nach einem der vorhergehenden Ansprüche, **dadurch gekennzeichnet, dass** an beweglichen Teilen der Vorrichtung jeweils eine gesonderte Kapselung vorgesehen ist.

## Claims

1. A device for treating waste materials particularly requiring supervision or for treating crushed waste materials particularly requiring supervision according to the Waste Catalogue Ordinance (AVV) with the number KMF AVV 170603* in order to produce transportable waste materials, which device has at least one pressing device, wherein the device (1) is mobile and wherein a low pressure is present in the device (1) during the treatment procedure,
**characterised in that** for the waste materials introduced into the device (1) packaged in plastic sacks there is provided at least one device for spraying with fluid the waste materials packaged in plastics sacks, **in that** at least one feed band (4) and/or at least one feed hopper (5) for the waste materials is provided, and **in that** a fluid mist is present in the region of the at least one feed band (4) and/or the at least one feed hopper (5).

2. A device according to claim 1, **characterised in that** the device (1) is in the form of a container (2).

3. A device according to claim 1 or 2, **characterised in that** an extraction of air is provided.

4. A device according to claim 1, **characterised in that** at least one device (10) for producing a fluid mist is provided.

5. A device according to any one of the preceding claims, **characterised in that** at least one packaging device (6) for the pressed waste materials is provided in the device 1.

6. A device according to claim 5, **characterised in that** a hose packaging device is provided.

7. A device according to any one of the preceding claims, **characterised in that** at least one welding device for the welding of packaging material is provided.

8. A device according to any one of the preceding claims, **characterised in that** a respective separate encapsulation is provided at movable parts of the device.

## Revendications

1. Dispositif de traitement de déchets soumis à une surveillance particulière ou de déchets broyés soumis à une surveillance particulière selon l'Ordonnance de classification des déchets (AVV) portant le numéro KMF AVV 170603' pour la génération de déchets transportables, lequel dispositif présente au moins un dispositif de pressage, le dispositif (1) étant réalisé de manière mobile et une dépression régnant dans le dispositif (1) pendant le processus de traitement,
**caractérisé en ce qu'**au moins un dispositif de pulvérisation des déchets emballés dans des sacs plastiques avec du liquide est prévu pour les déchets emballés dans des sacs plastiques introduits dans le dispositif (1), **en ce qu'**au moins une bande d'alimentation (4) et/ou au moins un entonnoir d'alimentation (5) pour les déchets est prévu, et **en ce qu'**un brouillard de liquide est présent dans la zone de l'au moins une bande d'alimentation (4) et/ou de l'au moins une trémie d'alimentation (5).

2. Dispositif selon la revendication 1, **caractérisé en ce que** le dispositif (1) est réalisé comme un conteneur (2).

3. Dispositif selon la revendication 1 ou 2, **caractérisé en ce qu'**une aspiration d'air est prévue.

4. Dispositif selon la revendication 1, **caractérisé en ce qu'**au moins un dispositif (10) pour générer un brouillard de liquide est prévu.

5. Dispositif selon l'une quelconque des revendications précédentes, **caractérisé en ce qu'**au moins un dispositif d'emballage (6) pour les déchets pressés est prévu dans le dispositif (1).

6. Dispositif selon la revendication 5, **caractérisé en ce qu'**un dispositif d'emballage tubulaire est prévu.

7. Dispositif selon l'une quelconque des revendications précédentes, **caractérisé en ce qu'**au moins un dispositif de soudage est prévu pour le soudage de matériau d'emballage.

8. Dispositif selon l'une quelconque des revendications précédentes, **caractérisé en ce que** respectivement une encapsulation séparée est prévue sur des pièces mobiles du dispositif.
